# EUROPEAN PATENT SPECIFICATION

(11) **EP 2 578 449 B1**
(45) Date of publication and mention of the grant of the patent: **08.04.2015**
(21) Application number: 11183659.9
(22) Date of filing: 03.10.2011
(51) Int. Cl.: B60N 3/10, B60R 7/04

(54) **Storage device for a vehicle seat**
Aufbewahrungsvorrichtung für einen Fahrzeugsitz
Dispositif de stockage pour siège de véhicule

(43) Date of publication of application: 10.04.2013
(73) Proprietor: Volvo Car Corporation, 405 31 Göteborg (SE)
(72) Inventor: Göthlin, Jonas, 423 43 Torslanda (SE); Dahlberg, Kenneth, 416 70 Göteborg (SE)

(56) References cited:
- US-A1- 2003 080 593

## Description

### TECHNICAL FIELD

The invention pertains to a storage device in general and, more specifically, to a storage device for a vehicle seat.

### BACKGROUND ART

Numerous storage devices are provided on-board a vehicle to store different objects of interest such as documents, keys, glasses, cups, cans, sippers, gadgets, bottles and food items. Some common storage devices that are available on board a vehicle are present on the dashboard, pockets at the back of seats, and slots in doors and armrests.

A commonly used storage device is a cup holder for storing drinking cups/cans/mugs etc. The storage devices generally available for this purpose are cup holders or retractable cup holders on dashboards, slots on doors and armrests and cup holders that can be clipped somewhere inside the vehicle interior. Further, these storage devices are not optimally ergonomically designed and there can be difficult to access them.

Furthermore, options available for storing drinking cups/cans to occupants of the rear seats are very limited. The rear seat occupants generally have slots in the doors and/or armrests to store drinking cups and cans. Especially armrests that are folded out on the middle seat cushion of the rear seat are common, wherein the middle seat is not available for seating. A cup/bottle/can stored in a cup holder in an armrest is also commonly placed too high to be ergonomic to pick up for a seated person.

US 2003/008 0593 A1 discloses a cupholder assembly with a hinge, covered with the same material as an automotive seat.

In light of the above discussion, there is a need for a new and improved storage device which will overcome the problems associated with the existing storage devices and provide a compact and easy to access storage device.

### SUMMARY

Among others, the object of the present invention is to provide an easy access vehicle storage device. The storage device should especially be suited to be arranged in a backseat of a vehicle without occupying a passenger seat, such that no one can be seated therein.

The storage device for a vehicle seating according to the invention comprises a main body and a cover, wherein said storage device is adapted to be arranged in a seat cushion of said seating and said seat cushion having an exposed seating surface. With a seat cushion, a seating area for one person is meant, wherein such a seating area can consist of a single seat cushion or be an area corresponding to an area that is needed for one person seated in on a multi person seat. The exposed seating surface is the upper surface of the seat cushion, upon which a person is supposed to be seated.

The main body of the storage device is adapted to be fixedly arranged relative said seat cushion, i.e. in the seat cushion itself, in the structure beneath or equal.

The cover having an outer and an inner surface, and can pivot relative said main body between a closed and a storage position. In said storage position access to a compartment inside said storage device is provided. In said closed position said main body is covered by said cover, whereby said outer surface of the cover levels with said seating surface of the seat cushion. The inventive device is characterised in that said storage device length only partially extends over a length of said seat cushion.

The compartment is provided with a bottom on a depth, which is about equal to the width of the compartment.

The main body and said inner surface of the cover together forms said compartment when the cover is positioned in the storage position.

Said cover and said main body are connected with a pivot joint arranged closed to the bottom of said compartment, about which pivot joint the cover can pivot.

The above described storage device has a number of advantages. First, the inventive storage device is compact. The compactness is achieved by forming the compartment of the inner surface of the cover and the main body in combination with the arrangement of the pivot joint close to the bottom of the device. The inner surface of the cover can thereby be folded into the space of the compartment, when the cover is brought into its closed position.

Further, the limited length dimension of the storage device in relation to the length dimension of the seat cushion enables a person to sit on the seat at the same time as the storage device is in use, e.g. the cover is in a storage position. By centring the storage device in the seat cushion, a person seated thereon, is able to open and used the storage device, which is positioned between the seated person's legs.

The storage device is arranged such in relation to the seat cushion that in a closed position the outer surface of the cover levels with the exposed seating surface and thus appears as an integral part of the seat cushion. By adding upholstery in the cover, the same sitting comfort can be achieved thereon as on the rest of the seat cushion.

The storage device is essentially thought to store objects such as drinking cups and cans, when the cover is positioned in its storage position. A storage device according to the invention is therefore primarily suitable for temporary storage of devices, such as bottles, cans, cups or mobile phones. Due to the essentially equal depth and width of the compartment a side support is created which prevents the items stored therein from tipping or falling out.

Further, the storage device is provided with an opening mechanism, which is adapted to apply a first force on a point of said cover having a lever to said pivot point, such that by activating said opening mechanism when said cover is positioned in said closed position, said first force is applied on said point whereby said cover pivots from said closed position to said storage position. Because the point on the cover, at which the first force is applied, has a lever to the pivot point, the first force will act upon the cover such that it pivots thereabout. It is within the task of the constructor to select a suitable point to apply said first force. The provision of such an opening mechanism is very simple and thus easy to provide.

Preferably, the storage device is provided with a locking means that is provided between said main body and said cover. The locking means locks said cover in its closed position, such that it is locked in said closed position, whereby it cannot pivot about said pivot point. The locking mechanism prevents any accidental opening of the device.

An embodiment of a locking device is provided with a plunger arranged at a first part, e.g. the main body, and an orifice, arranged in a second part, e.g. the cover, wherein the plunger is adapted to protrude into said orifice. A storage device provided with such a locking device has a cover provided with the orifice and a main body provided with the plunger. It should be realised that the several alternative solutions can be used to provide the said locking means. Examples of such system can be one of a magnetic locking system, a latching systems or a friction locking system integrated in the pivot joints or elsewhere.

Furthermore, the plunger is provided with a resilient member acting with a spring force upon said plunger such that the plunger automatically protrudes into said orifice when said cover is positioned in its closed position. The resilient member acting upon the plunger enables automatic locking of the storage device and the user must therefore not take any measures in order to lock the cover in its closed position.

Further, in a preferred embodiment of the storage device is provided with said opening mechanism, wherein the openings mechanism also applies a second force acting upon said plunger in opposite direction of said spring force. The plunger is thereby retracted from its locking position, when the second force exceeds the spring force acting upon the plunger. Due to the inventive locking means in combination with the inventive opening mechanism, the cover can be unlocked and opened in just one action.

A preferred opening mechanism comprises a strap fixed into said point on the cover. The strap is arranged such that it is guided by said plunger. The plunger guides the strap such that it has a curved arrangement, whereby by pulling the strap said first force is applied onto said point on the cover and said second force is applied onto said plunger when the strap is straightened out by the pulling force. The strap interacts with the plunger to retract it in that the strap is straightened out by the pulling force and the plunger thereby force back against the spring force of the resilient member. When the cover is unlocked, the cover swings open due to the first force applied with a lever to the pivot joint.

In one embodiment of the inventive device, the opening mechanism comprises a button, which upon activation said first force is applied onto said point of the cover and said second force is applied onto the plunger. The previous described embodiment of the opening mechanism can easily be adapted to function also with a button, wherein the button applies the pulling force upon said strap.

In an advantageous embodiment of the invention, said storage device is located at the edge of said seat cushion. By placing the storage device at the edge makes it easier to by a person seated on the seat. Further, the cover is shaped such that it follows the edge and shape of the seat cushion.

In another advantageous embodiment of the inventive device, the cover of the storage device opens in the direction of said edge. This arrangement provides convenient access to the storage compartment to a person seated on the seat, because the parts of the cover protruding above the seating surface is not obstructing a seated person when accessing the storage compartment.

In one embodiment of the inventive device, the compartment of the storage device comprises a bottle-holder having at least a first and a second rounded surface arranged such that they are adapted to receive a cup, whereby said first rounded surface is a part of said inner surface of said cover and said second rounded surface is a part of said main body. The arrangement of providing the inner surface of the cover and the inner surface of the cover together to hold a cup/object facilitates to create a storage device that is compact and has less space demand. When the cover is positioned in its closed position, the curved surfaces are folded into each other, wherein the storage device becomes more compact in its closed position. This is enabled through the arrangement of said first rounded surfaces at the inner surface of the cover.

It is advantageous that the outer surface of the cover is covered with the same material as the upper surface of the seat cushion. This enables the storage device cover to blend with the seat.

Seating of a vehicle, wherein a seat cushion of said seating is provided with a storage device according to the invention.

Further, by placing the storage device in the seat provides the best ergonomic position to access the cup holder. The user can sit in the seat and still access the storage device.

### BRIEF DESCRIPTION OF THE DRAWINGS

In the following section, the invention will be described in a greater detail with reference to embodiments shown by the enclosed figures. It should be emphasised that the embodiments shown are used for example purposes only and should not be used to limit the scope of the invention.
- Figure 1: shows a perspective view of the inventive storage device as attached to a vehicle seat;
- Figure 2: shows a perspective view of a storage device with a cover in a storage position.;
- Figure 3a: shows a side view of the storage device in a closed position;
- Figure 3b: shows the cross sectional side view of the storage device in a closed position;
- Figure 4a: shows the side view of the storage device in a storage position; and
- Figure 4b: shows the cross sectional side view of a storage device in a storage position.

All the drawings are schematic and show the relation of the different features to each other. A person skilled in the art will readily appreciate that various features disclosed in the description may be modified, and that various embodiments disclosed and/or claimed may be combined without departing from the scope of the invention.

### DETAILED DESCRIPTION

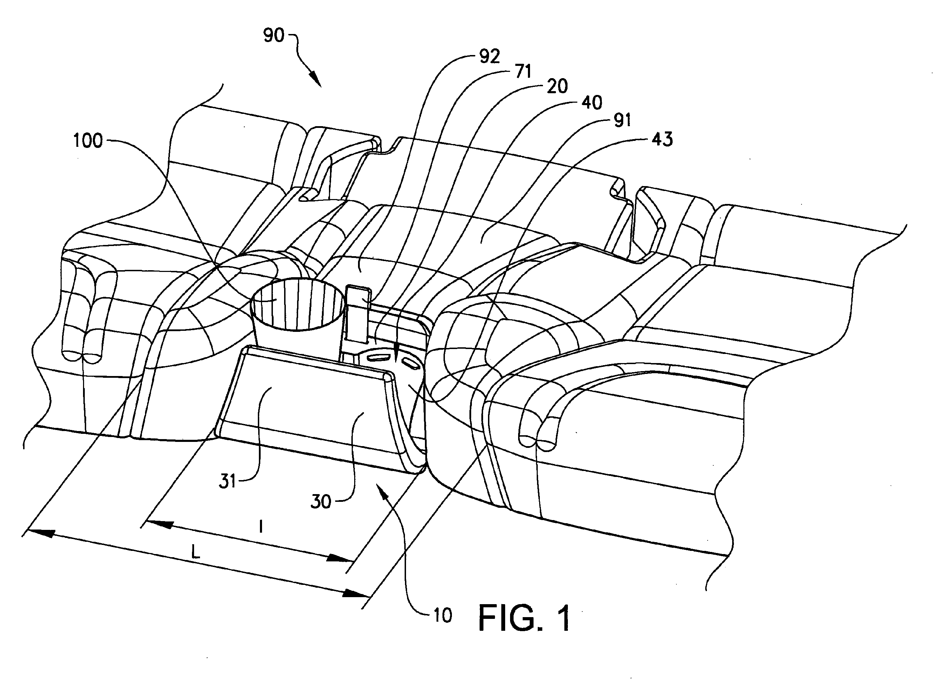

Figure 1 shows a perspective view of the inventive storage device 10 arranged on a vehicle seat 90 wherein the storage device 10 is arranged i in a seat cushion 91 of the vehicle seat 90. The seat cushion 91 has an exposed seating surface 92. Further, the storage device 10 has a length (I) and the exposed seating surface 92 has a length (L) and the length (I) of the storage device 10 partially extends over the length (L) of the seat cushion 91.

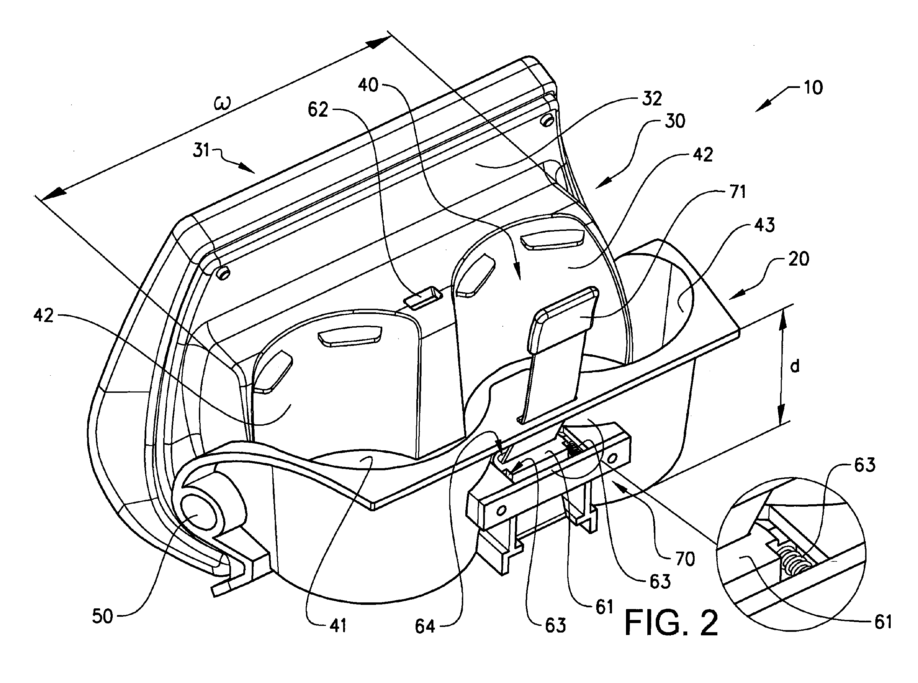

The storage device 10 shown is in its storage position, in which the cover 30 is open. The cover 30 comprises an inner surface 32 (shown in fig. 2) and an outer surface 31. Figure 1 is a cup 100 placed in the storage device 10, the storage device 10 can obviously also receive other objects within the same size range.

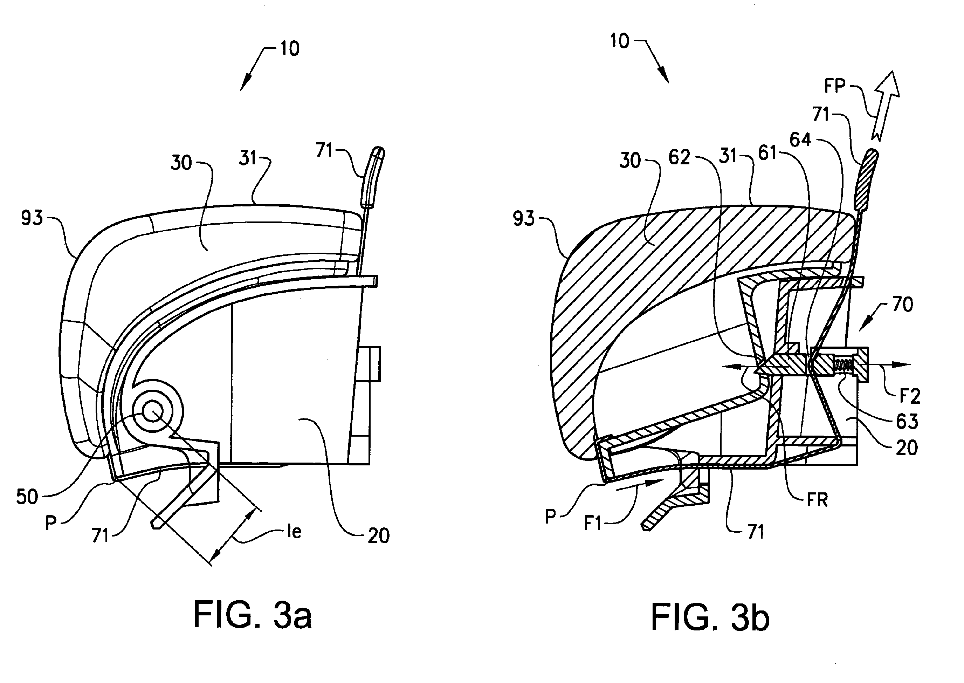

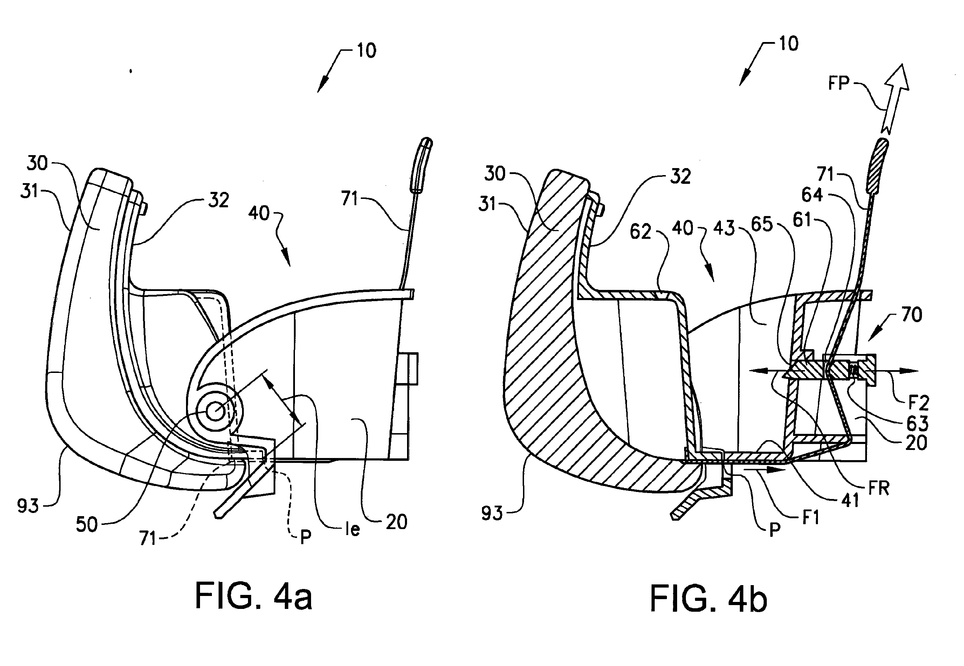

Figure 2 shows a perspective view of the storage device 10 having the cover 30 in a storage position. As mentioned above, the cover 30 is pivotally arranged to the main body 20in a pivot point 50. The pivot joint 50 is arranged close to the bottom 41 of the main body 20. Further, the bottom 41 is arranged, such that the compartment 40 becomes a depth (d) which is about half of the width (w) of the compartment 40. The main body 20 and the inner surface 32 together form the storage compartment 40 when the cover 30 is in the storage position. The compartment 40 is further shaped as a bottle holder having at least a first and second rounded surface 42 and 43 wherein the first rounded surface 42 is part of the inner surface 32 of said cover 30 and said second rounded surface 43 is part of said main body 20. The storage device 10 further comprises a locking mechanism 60 to lock the storage device 10 while it is in a closed position. The locking mechanism 60 comprises a plunger 61 and at least one resilient member 63 wherein the resilient member 63 is a spring. In order to unlock and open the storage device 10, an opening mechanism 70 is provided which comprises a strap 71. The strap 71 is fixed into a point (p) (shown in fig. 3b and 4b) of the cover 30 and passes through a hole 64 in the body of the plunger 61. The storage device 10 is opened by pulling the strap 71.

Figure 3a and b shows a side view respectively a cross sectional view of the storage device 10 having the cover 30 in a closed position, . The plunger 61 of the locking mechanism 60 protrudes thereby into an orifice 62 provided in the cover 30. The plunger 61 is pushed into the orifice 62 by a resilient force (FR) that is applied by the resilient member 63. The cover is thereby locked in its closed position and an accidental opening of the storage device 10 is prevented. Figure 4a shows the side view of the storage device 10 in a fully open position and Figure 4b shows the cross sectional side view of the storage device 10 also in the fully open position. The opening mechanism 70 of the storage device 10 will be explained in detail in conjunction with Figure 4a and 4b. In order to open the storage device 10, the strap 71 is pulled by the user 1 by exerting a force FP. As the strap 71 is pulled, a force F1 is applied on both the point (p) and the lever (le). The force F1 acting on the lever (le) operates the lever (le) and tries to lift the cover 30 to open the storage device 10. Further, as the strap 71 passes through a hole 64 in the plunger 61, the pulling of the strap 71 exerts a force F2 that acts upon the plunger 61. The force F2 acts opposite to the resilient force FR and retracts the plunger 61. This retraction releases the plunger 61 from the orifice 62 and unlocks the storage device 10. Further, the force F1 acting on the lever (le) lifts the cover 30 and pivots it to bring the storage device 10 into a fully open position.

The method of closing the storage device 10 will now be described. In order to close the storage device 10, the cover 30 is lowered by the user 1. Upon lowering the cover 30, the cover 30 comes in contact with the tapered face 65 of the plunger 61. The cover 30 acts against the plunger 61 and pushes it by exerting a force on the resilient member 63. Further, as the cover 30 is gradually lowered, at one point the plunger 61 will protrude into the orifice 62. The plunger 61 thereby locks the cover 30 in its closed position.

To move the cover 30 from the closed position in fig. 3a and b, the opening mechanism 70 is activated. The opening mechanism 70 comprises of the strap 71 in which the user pulls with a pulling force FP in order to open the storage device 10. By pulling the strap 71 a first force F1 is applied in the point p on the cover 30. The strap 71 is thereby tensioned and a second force F2 acts upon the plunger 61 in opposite direction of the spring force FR of the resilient member 63 acting upon the plunger 61. Because the strap 71 is guided by the plunger 61 in a curved manner, the second force F2 arises as the strap 71 is straightened from the pulling force FP of the user. Because the point p has a lever le to the pivot point 50 the force F1 acts upon the cover such that it wants to pivot into its storage position, and will do so when the second force F2 exceeds the spring force FR and the plunger 61 thereby is retracted from the orifice 62.

As will be evident to a person ordinarily skilled in the art, various other locking means can be provided instead of the plunger 61 based locking present in the invention. Examples of suitable locking means are a magnetic locking, a friction based locking or some kind of latching means.

The storage device 10 is adapted to be arranged in a vehicle seat 90 Further, the edge of the cover 30 of the storage device 10 is aligned to a seat edge 93 of the vehicle seat 90. The storage device 10 is arranged in the vehicle seat 90 in such a manner that the said cover 30 opens in the direction of said seat edge 93. This opening direction of the cover 30 allows the occupant of the seat to open and use the storage means while being seated on the seat.

In an embodiment of this invention, the opening mechanism 70 can be activated by using a press button. The press button upon activation exerts a second force (F2) onto the plunger 61 and thereafter the first force (F1) is applied onto said point (p) of the cover 30 to operate the lever (le) and simultaneously open the cover 30.

It is preferred that the outer surface 31 of the cover 30 is covered with the same material as that of the exposed seating surface (92) of said seat cushion (91). In general, same upholstery is used to give a proper aesthetic look to the seating and cover.

In an embodiment of this invention, the cover 30 has an edge that has a contour that corresponds to the contour of the seat edge. The provision of having the same contour edge for the seat and the storage device provides proper comfort to the occupant of the seat.

In an embodiment of this invention, the inventive storage device 10 can be used for any type of seat. The seat can be a bucket or a bench type. Further, the storage device 10 can be used with a front seat or a rear seat. The inventive storage device 10 is however specially adapted to the middle seat in the backseat of an automobile.

Further, it will be realised that the storage device 10 is provided with several connecting means to removably couple it to the vehicle seat 90. As will be evident to a person ordinarily skilled in the art, the connecting means can be selected from but not limited to the following: clasps, screws, clamps among others.

Reference signs mentioned in the claims should not be seen as limiting the extent of the matter protected by the claims, and their sole function is to make claims easier to understand.

As will be realised, the invention is capable of modification in various obvious respects, all without departing from the scope of the appended claims. Accordingly, the drawings and the description thereto are to be regarded as illustrative in nature, and not restrictive.

## Claims

1. Storage device (10) for a vehicle seating (90), especially a rear seating in a passenger car, said storage device (10) comprises a main body (20) and a cover (30), wherein said storage device (10) is adapted to be arranged in a seat cushion (91) of said seating (10) and said seat cushion (91) having an exposed seating surface (92), wherein
- said main body (20) is adapted to be fixedly arranged in said seat cushion (91), and
- said cover (30) having an outer and an inner surface (31, 32), and can pivot relative said main body (10) between a closed and a storage position, wherein
- in said storage position access to a compartment (40) inside said storage device (10) is provided, and
- in said closed position said main body (20) is covered by said cover (30), and said outer surface (31) of the cover (30) levels with said seating surface (92),
- said storage device (10) length (I) only partial extends over a length (L) of said seat cushion (91), and
- said compartment (40) is provided with a bottom (41) on a depth (d), which is about equal to the width (w) of the compartment (40),
- said main body (20) and said inner surface (32) forms said compartment (40) when the cover (30) is positioned in said storage position, and
- said cover (20) and said main body (30) are connected with a pivot joint (50) arranged closed to the bottom (41) of said compartment (40), about which pivot point (50) the cover (30) can pivot,
**characterised in**, that
said compartment (40) comprises a bottle-holder having at least a first and a second rounded surface (42, 43) arranged such that they are adapted to receive a cup (100), whereby said first rounded surface (42) is a part of said inner surface (32) of said cover (30) and said second rounded surface (43) is a part of said main body (20).

2. Storage device (10) according to claim 1, wherein said storage device (10) is provided with an opening mechanism (70), which is adapted to apply a first force (F1) on a point (p) of said cover (30) having a lever (le) to said pivot point (50), such that by activate said opening mechanism (70) when said cover (30) is positioned in said closed position, said first force (F1) is applied on said point (p) whereby said cover (30) pivots from said closed position to said storage position.

3. Storage device (10) according to any one of claim 1 and 2, wherein locking means (60) is provided between said main body (20) and said cover (30), whereby said locking means (60) locks said cover (20) in its closed position, such that it is locked in said closed position.

4. Storage device (10) according to claim 3, wherein said cover (30) is provided with an orifice (62) and said locking means (60) comprises a plunger (61) arranged in the main body (20) and which is adapted to protrude into said orifice (62) when the cover (30) is positioned in its closed position.

5. Storage device (10) according to claim 3 or 4, wherein said plunger (61) is provided with a resilient member (63) acting with a spring force (FR) upon said plunger (61) such that the plunger (61) automatically protrude into said orifice (62) when said cover (30) is positioned in its closed position.

6. Storage device (10) according to claim 5, wherein by activating said opening mechanism (70) said plunger (61) is applied by a second force (F2) acting in opposite direction of said spring force (FR), such that said plunger (61) is retracted from its locking position.

7. Storage device (10) according to claim 6, wherein said opening mechanism (70) comprises a strap (71) fixed into said point (p) of the cover (30) and arranged such that is guided by said plunger (61) such that it is has a curved arrangement, which is straightened out by pulling the strap (71) and whereby said first force (F1) is applied onto said point (p) of the cover (30) and said second force (F2) is applied onto said plunger (61).

8. Storage device (10) according to claim 6, wherein said opening mechanism (70) comprises a press button, which upon activation first, said second force (F2) is applied onto said plunger (61) and thereafter said first force (F1) is applied onto said point (p) of the cover (30).

9. Storage device (10) according to any one of the preceding claims, wherein said storage device (10) is located at the edge (93) of said seat cushion (92).

10. Storage device (10) according to claim 9, wherein said cover (30) opens in the direction of said edge (93).

11. Storage device (10) according to any one of the preceding claims, wherein said outer surface (31) of said cover (30) is cover with the same material as said upper surface (92) of said seat cushion (91).

12. Seating (90) of a vehicle, wherein a seat cushion (91) of said seating is provided with a storage device (10) according to any of the claims 1-11.

## Patentansprüche

1. Aufbewahrungsvorrichtung (10) für einen Fahrzeugsitz (90), insbesondere einen Rücksitz in einem Personenkraftwagen, wobei die Aufbewahrungsvorrichtung (10) einen Hauptkörper (20) und eine Abdeckung (30) umfasst, wobei die Aufbewahrungsvorrichtung (10) ausgelegt ist, in einem Sitzpolster (91) des Sitzes (10) angeordnet zu sein und wobei das Sitzpolster (91) eine frei liegende Sitzoberfläche (92) aufweist, wobei
- der Hauptkörper (20) zum festen Anordnen in dem Sitzpolster (91) ausgelegt ist und
- die Abdeckung (30) eine äußere und eine innere Oberfläche (31, 32) aufweist und relativ zu dem Hauptkörper (20) zwischen einer geschlossenen und einer Aufbewahrungsposition geschwenkt werden kann, wobei
- in der Aufbewahrungsposition ein Zugang zu einem Fach (40) in der Aufbewahrungsvorrichtung (10) bereitgestellt wird, und
- in der geschlossenen Position der Hauptkörper (20) mit der Abdeckung (30) bedeckt ist und die äußere Oberfläche (31) der Abdeckung (30) mit der Sitzfläche (92) auf einer Ebene liegt,
- wobei sich die Länge (I) der Aufbewahrungsvorrichtung (10) nur teilweise über eine Länge (L) des Sitzpolsters (91) erstreckt, und
- das Fach (40) mit einem Boden (41) an einer Tiefe (d) bereitgestellt wird, die etwa der Breite (w) des Fachs (40) entspricht,
- wobei der Hauptkörper (20) und die innere Oberfläche (32) das Fach (40) bilden, wenn die Abdeckung (30) in der Aufbewahrungsposition angeordnet wird, und
- wobei die Abdeckung (30) und der Hauptkörper (20) mit einem Schwenkgelenk (50) verbunden sind, das geschlossen am Boden (41) des Fachs (40) angeordnet ist und um dessen Schwenkpunkt (50) die Abdeckung (30) schwenken kann,
**dadurch gekennzeichnet, dass**
das Fach (40) einen Flaschenhalter mit mindestens einer ersten und einer zweiten abgerundeten Oberfläche (42, 43) umfasst, die so angeordnet sind, dass sie einen Becher (100) aufnehmen können, wobei die erste abgerundete Oberfläche (42) ein Teil der inneren Oberfläche (32) der Abdeckung (30) ist und die zweite abgerundete Oberfläche (43) ein Teil des Hauptkörpers (20) ist.

2. Aufbewahrungsvorrichtung (10) nach Anspruch 1, wobei die Aufbewahrungsvorrichtung (10) mit einem Öffnungsmechanismus (70) bereitgestellt ist, der zum Ausüben einer ersten Kraft (F1) auf einen Punkt (p) der Abdeckung (30) ausgelegt ist und einen Hebel (Ie) am Schwenkpunkt (50) aufweist, sodass durch Aktivieren des Öffnungsmechanismus (70), wenn die Abdeckung (30) in der geschlossenen Position angeordnet ist, die erste Kraft (F1) auf den Punkt (p) ausgeübt wird, sodass die Abdeckung (30) von der geschlossenen Position zu der Aufbewahrungsposition schwenkt.

3. Aufbewahrungsvorrichtung (10) nach einem der Ansprüche 1 und 2, wobei ein Verriegelungsmittel (60) zwischen dem Hauptkörper (20) und der Abdeckung (30) bereitgestellt wird, wobei das Verriegelungsmittel (60) die Abdeckung (30) in ihrer geschlossenen Position verriegelt, sodass sie in ihrer geschlossenen Position verriegelt ist.

4. Aufbewahrungsvorrichtung (10) nach Anspruch 3, wobei die Abdeckung (30) mit einer Öffnung (62) bereitgestellt ist und das Verriegelungsmittel (60) einen Stößel (61) umfasst, der im Hauptkörper (20) angeordnet ist und der zum Herausragen in die Öffnung (62) ausgelegt ist, wenn die Abdeckung (30) in ihrer geschlossenen Position angeordnet ist.

5. Aufbewahrungsvorrichtung (10) nach Anspruch 3 oder 4, wobei der Stößel (61) mit einem elastischen Element (63) bereitgestellt ist, das mit einer Federkraft (FR) auf den Stößel (61) einwirkt, sodass der Stößel (61) automatisch in die Öffnung (62) ragt, wenn die Abdeckung (30) in ihrer geschlossenen Position angeordnet ist.

6. Aufbewahrungsvorrichtung (10) nach Anspruch 5, wobei durch Aktivieren des Öffnungsmechanismus (70) eine zweite Kraft (F2) auf den Stößel (61) ausgeübt wird, die entgegen der Richtung der Federkraft (FR) wirkt, sodass der Stößel (61) aus seiner Verriegelungsposition zurückgezogen wird.

7. Aufbewahrungsvorrichtung (10) nach Anspruch 6, wobei der Öffnungsmechanismus (70) einen Riemen (71) umfasst, der im Punkt (p) der Abdeckung (30) befestigt ist und derart angeordnet ist, dass er von dem Stößel (61) geführt wird, sodass er eine gekrümmte Anordnung aufweist, die durch Ziehen des Riemens (71) begradigt wird, wodurch die erste Kraft (F1) auf den Punkt (p) der Abdeckung (30) ausgeübt wird und die zweite Kraft (F2) auf den Stößel (61) ausgeübt wird.

8. Aufbewahrungsvorrichtung (10) nach Anspruch 6, wobei der Öffnungsmechanismus (70) einen Druckknopf umfasst, der bei erster Aktivierung zunächst die zweite Kraft (F2) auf den Stößel (61) ausübt und danach die erste Kraft (F1) auf den Punkt (p) der Abdeckung (30) ausübt.

9. Aufbewahrungsvorrichtung (10) nach einem der vorhergehenden Ansprüche, wobei die Aufbewahrungsvorrichtung (10) am Rand (93) des Sitzpolsters (91) angeordnet ist.

10. Aufbewahrungsvorrichtung (10) nach Anspruch 9, wobei die Abdeckung (30) in Richtung des ersten Randes (93) öffnet.

11. Aufbewahrungsvorrichtung (10) nach einem der vorhergehenden Ansprüche, wobei die äußere Oberfläche (31) der Abdeckung (30) mit dem gleichen Material wie die obere Oberfläche (92) des Sitzpolsters (91) bedeckt ist.

12. Sitz (90) eines Fahrzeugs, wobei ein Sitzpolster (91) des Sitzes mit einer Aufbewahrungsvorrichtung (10) nach einem der Ansprüche 1 bis 11 bereitgestellt wird.

## Revendications

1. Dispositif de rangement (10) pour un ensemble de siège de véhicule (90), en particulier un ensemble de siège arrière dans une voiture de tourisme, ledit dispositif de rangement (10) comprenant un corps principal (20) et un couvercle (30), ledit dispositif de rangement (10) étant conçu pour être placé dans un coussin de siège (91) dudit ensemble de siège (90) et ledit coussin de siège (91) comportant une surface d'assise exposée (92),
- ledit corps principal (20) étant conçu pour être placé de manière fixe dans ledit coussin de siège (91), et
- ledit couvercle (30) comportant des surfaces extérieure et intérieure (31, 32), et pouvant pivoter par rapport audit corps principal (20) entre des positions fermée et de rangement,
- un compartiment (40) situé à l'intérieur dudit dispositif de rangement (10) étant accessible dans ladite position de rangement, et
- ledit corps principal (20) étant, dans ladite position fermée, recouvert par ledit couvercle (30) et ladite surface extérieure (31) du couvercle (30) étant alignée avec ladite surface d'assise (92),
- la longueur (1) dudit dispositif de rangement (10) s'étendant seulement partiellement sur une longueur (L) dudit coussin de siège (91), et
- ledit compartiment (40) étant doté d'un fond (41) à une profondeur (d), qui est approximativement égale à la largeur (w) du compartiment (40),
- ledit corps principal (20) et ladite surface intérieure (32) formant ledit compartiment (40) lorsque le couvercle (30) se trouve dans ladite position de rangement, et
- ledit couvercle (30) et ledit corps principal (20) étant raccordés au moyen d'une liaison pivot (50) placée à proximité du fond (41) dudit compartiment (40), liaison pivot (50) autour de laquelle peut pivoter le couvercle (30), **caractérisé en ce que**
ledit compartiment (40) comprend un support pour bouteille comportant au moins des première et deuxième surfaces courbes (42, 43) placées de telle sorte qu'elles puissent recevoir un gobelet (100), ladite première surface courbe (42) faisant partie de ladite surface intérieure (32) dudit couvercle (30) et ladite deuxième surface courbe (43) faisant partie dudit corps principal (20).

2. Dispositif de rangement (10) selon la revendication 1, ledit dispositif de rangement (10) étant doté d'un mécanisme d'ouverture (70), qui est conçu pour appliquer une première force (F1) au niveau d'un point (p) dudit couvercle (30) relié à ladite liaison pivot (50) par un axe de levier (le), de telle sorte que, par l'activation dudit mécanisme d'ouverture (70) lorsque ledit couvercle (30) se trouve dans ladite position fermée, ladite première force (F1) est appliquée au niveau dudit point (p), suite à quoi ledit couvercle (30) pivote de ladite position fermée à ladite position de rangement.

3. Dispositif de rangement (10) selon l'une quelconque des revendications 1 et 2, un moyen de verrouillage (60) étant prévu entre ledit corps principal (20) et ledit couvercle (30), ledit moyen de verrouillage (60) verrouillant ledit couvercle (30) dans sa position fermée, de telle sorte qu'il est verrouillé dans ladite position fermée.

4. Dispositif de rangement (10) selon la revendication 3, ledit couvercle (30) étant doté d'un orifice (62) et ledit moyen de verrouillage (60) comprenant un piston (61) placé dans le corps principal (20) et étant conçu pour faire saillie dans ledit orifice (62) lorsque le couvercle (30) se trouve dans sa position fermée.

5. Dispositif de rangement (10) selon la revendication 3 ou 4, ledit piston (61) étant doté d'un élément élastique (63) agissant au moyen d'une force élastique (FR) sur ledit piston (61) de telle sorte que le piston (61) fasse automatiquement saillie dans ledit orifice (62) lorsque ledit couvercle (30) se trouve dans sa position fermée.

6. Dispositif de rangement (10) selon la revendication 5, l'activation dudit mécanisme d'ouverture (70) entraînant l'application audit piston (61) d'une seconde force (F2) agissant dans la direction opposée à celle de ladite force élastique (FR), de telle sorte que ledit piston (61) soit rétracté de sa position de verrouillage.

7. Dispositif de rangement (10) selon la revendication 6, ledit mécanisme d'ouverture (70) comprenant une lanière (71) fixée au niveau dudit point (p) du couvercle (30) et placée de telle sorte qu'elle soit guidée par ledit piston (61) de façon à présenter une configuration courbe, qui est redressée en tirant sur la lanière (71), ladite première force (F1) étant ainsi appliquée au niveau dudit point (p) du couvercle (30) et ladite seconde force (F2) étant ainsi appliquée audit piston (61).

8. Dispositif de rangement (10) selon la revendication 6, ledit mécanisme d'ouverture (70) comprenant un bouton poussoir dont l'activation a pour effet que ladite seconde force (F2) soit d'abord appliquée audit piston (61) et ladite première force (F1) soit ensuite appliquée au niveau dudit point (p) du couvercle (30).

9. Dispositif de rangement (10) selon l'une quelconque des revendications précédentes, ledit dispositif de stockage (10) étant situé au bord (93) dudit coussin de siège (91).

10. Dispositif de rangement (10) selon la revendication 9, ledit couvercle (30) s'ouvrant dans la direction dudit bord (93).

11. Dispositif de rangement (10) selon l'une quelconque des revendications précédentes, ladite surface extérieure (31) dudit couvercle (30) étant revêtue du même matériau que ladite surface supérieure (92) dudit coussin de siège (91).

12. Ensemble de siège (90) d'un véhicule, un coussin de siège (91) dudit ensemble de siège étant doté d'un dispositif de rangement (10) selon l'une quelconque des revendications 1 à 11.
